# EUROPÄISCHE PATENTSCHRIFT

(11) **EP 2 417 837 B1**
(45) Veröffentlichungstag und Bekanntmachung des Hinweises auf die Patenterteilung: **25.02.2015**
(21) Anmeldenummer: 10715140.9
(22) Anmeldetag: 30.03.2010
(51) Int. Cl.: H05B 41/288, H05B 41/292

(54) **SCHALTUNGSANORDNUNG UND VERFAHREN ZUM BETREIBEN EINER HOCHDRUCKENTLADUNGSLAMPE**
CIRCUIT ARRANGEMENT AND METHOD FOR OPERATING A HIGH-PRESSURE DISCHARGE LAMP
CIRCUITERIE ET PROCÉDÉ DE FONCTIONNEMENT D'UNE LAMPE À DÉCHARGE À HAUTE PRESSION

(30) Priorität: 06.04.2009 DE 102009016579
(43) Veröffentlichungstag der Anmeldung: 15.02.2012
(73) Patentinhaber: OSRAM GmbH, 80807 München (DE)
(72) Erfinder: KÄSTLE, Herbert, 83278 Traunstein (DE)
(86) Internationale Anmeldenummer: PCT/EP2010/054187
(87) Internationale Veröffentlichungsnummer: WO 2010/115773

(56) Entgegenhaltungen:
- US-A- 6 144 172
- US-A- 6 147 461
- US-B1- 6 522 089

## Beschreibung

### Technisches Gebiet

Die Erfindung betrifft eine Schaltungsanordnung und ein Verfahren zum Betreiben einer Hochdruckentladungslampe mit einen begradigten Bogen, aufweisend mindestens einen ersten und einen zweiten elektronischen Schalter in einer ersten Halbbrücke, einen Versorgungsspannungsanschluss und einen Bezugsmassenanschluss zum Versorgen der Halbbrückenanordnung mit einem Gleichspannungssignal, einen Lastkreis, der eine Lampendrossel und eine Blockkapazität aufweist und einerseits an den Halbbrückenmittelpunkt und andererseits an mindestens einen Anschluss zum Anschließen der Hochdruckentladungslampe gekoppelt ist, sowie eine Ansteuerschaltung zur Bereitstellung zumindest eines ersten und eines zweiten Ansteuersignals für den ersten und den zweiten elektronischen Schalter.

### Stand der Technik

Die Erfindung geht aus von einer Schaltungsanordnung und einem Verfahren zum Betrieb von Gasentladungslampen nach der Gattung des Hauptanspruchs. Die Erfindung handelt insbesondere von einer Schaltungsanordnung zum bogenbegradigten Betrieb von Gasentladungslampen.

Zum Betrieb von Hochdruckentladungslampen, insbesondere von Standard-HCI-Lampen, aber auch zum Betrieb von quecksilberfreien, molekularstrahlungsdominierten MF-Lampen, wird meist eine relativ niederfrequente rechteckförmige Lampenstromversorgung mit schneller Kommutierung verwendet. Die Stromkommutierung dient zur Verhinderung der einseitigen Elektrodenabnutzung und muss mit hinreichend schneller Umpolung bewerkstelligt werden, damit die Lampe während der Kommutierung nicht erlöscht. Die Kommutierungszeit sollte typischerweise im Bereich <100µs erfolgen. Die Kommutierungsfrequenz wird im Allgemeinen so gewählt, dass einerseits die kurzzeitigen Diskontinuitäten während des Kommutierungsvorgangs sich im Licht nicht als Flackern zeigen, was heißt, dass die Kommutierungsfrequenz möglichst > 50Hz sein sollte, und anderseits die akustischen Emissionen sowohl vom elektronischen Betriebsgerät als auch von der heißen Gasentladungslampe möglichst nicht in den hörbaren Frequenzbereich fallen, d.h. die Kommutierungsfrequenz sollte möglichst <200Hz sein. Die besten Ergebnisse erzielt man, wenn man die Kommutierungsfrequenz bei 100Hz auf das Versorgungsnetz synchronisiert und damit die niederfrequenten und leicht sichtbaren Mischungsmoden zwischen dem allfälligen Ripple der Netzversorgung und den Schwankungen während den Kommutierungsübergängen unterdrückt werden. Die Kommutierungsfrequenz sollte aber auch nicht über den hörbaren Frequenzbereich bei >20 kHz gelegt werden, damit beim Betrieb der Lampe die akustischen Eigenresonanzen des Entladungsbogens, die bei gängigen Lampengeometrien ja zwischen 20kHz und 150kHz liegen, nicht willkürlich angeregt werden. Eine resonante Anregung des Lichtbogens würde in den meisten Fällen zu Bogenfluktuation und Bogeninstabilitäten führen, die letztlich zum Erlöschen der Lampe oder gar zur Zerstörung der Lampe führen können.

Mit dem oben beschriebenen einfachen Rechteckbetrieb können in der Regel die meisten standardisierten Hochdruckentladungslampen betrieben werden, ohne dass es dabei zu nennenswerten Bogeninstabilititäten und Bogenauslenkungen kommt. Anders verhält es sich hingegen bei speziellen Lampengeometrien mit hohen Aspektverhältnissen, d.h. Lampen mit hohem Verhältnis zwischen Lampengefäßlänge und Lampengefäßdurchmesser, bzw. Bogenlänge zu Bogendurchmesser, oder auch bei Lampen mit speziellen Lampengasfüllungen.

In diesen Fällen tritt neben der Möglichkeit der Anregung stabilitätsmindernder akustischer Eigenresonanzen auch die Möglichkeit auf, dass der Lichtbogen in Abhängigkeit von seiner Orientierung, wie vertikale oder horizontale Brennlage, infolge von Auftriebskräften in der heißen Lampe selbst, systematisch aus seinem axialen Zentrum heraus nach oben hin ausgelenkt wird und sich damit bogenförmig zwischen den Elektroden ausbildet. Diese bogenförmigen Auslenkungen führen im allgemeinen wegen der Änderung der effektiven Bogenlänge auch zu zur Änderung der elektrischen Plasmabetriebsparameter, wie z.B. der Brennspannung oder der Lage der akustischen Eigenresonanzen, welche aber anderseits für den stabilen Betrieb des Bogens mit einem elektronischen Betriebsgerät (EVG) von eminenter Wichtigkeit sind. Eine derartige systematische Bogenauslenkung kann also ebenfalls zu Problemen beim elektrischen Betrieb der Lampe und zu inherenten Bogeninstabilität führen.

Aus der US 6 144 172 ist eine Schaltungsanordnung zum Betreiben einer Hochdruckentladungslampe bekannt, welche die Hochdruckentladungslampe mit einem niederfrequenten Strom betreibt, auf den ein hochfrequenter Anteil aufmoduliert ist.

Des Weiteren verstehen sich die Nachteile eines sich auslenkenden Bogens von selbst, wenn man die praktische Anwendung der Lampe in einer Leuchte und die damit verbundenen goniometrischen Lichtauskopplungseffizienzen in einem Reflektorsystem betrachtet.

Zur Vermeidung dieser meist auftriebsbedingten Bogenauslenkungen in der Lampe und zur allgemeinen Stabilisierung von Entladungsbögen mit hohem Aspektverhältnis können nun die Betriebsmethoden der Bogenbegradigung bzw. des Arc-Straightenings angewandt werden.

Beim Arc-Straightening wird durch das elektrische Betriebsgerät gezielt eine spezielle akustische Eigenresonanz im Entladungsbogen der Lampe angeregt, die infolge ihrer modalen Eigenschaften nicht zu den allgemein üblichen Fluktuationen oder Bogeninstabilitäten führt, sondern vielmehr zu einer erhöhten Stabilität des Bogens insbesondere in seiner axialen Richtung. Die hierzu in Frage kommenden Eigenresonanzen sind meist die mit azimutaler Modenstruktur. Man spricht von der Anregung der 2. azimutalen akustischen Mode zum Zwecke der Bogenbegradigung bzw. zum Arc-Straightening.

Die Lage der für die Bogenbegradigung aktiven azimutalen Eigenfrequenzen hängt einerseits von der Geometrie der Lampe (Länge, Aspektverhältnis) aber auch von den allgemeinen Betriebsparametern der Lampe, wie Druck, Temperatur, Füllgas, Leistung etc. ab. Bei vorliegenden Lampen liegen die azimutalen Eigenmoden im Bereich zwischen 20kHz bis 150kHz, typ. 60kHz.

Die einfachste Methode zur gezielten Anregung einer speziellen akustischen Eigenfrequenz in der Lampe ist die, dass man mit dem elektronischen Betriebsgerät den Lichtbogen bereits mit einer hochfrequenten Versorgungsspannung oder Versorgungsstrom betreibt.

Im Gegensatz zum Rechteckbetrieb spricht man hier von einem Hochfrequenzbetrieb oder von Direkt-Drive. Will man z.B. mit dem elektronischen Betriebsgerät im Direct-Drive gezielt eine azimutale Mode in der Lampe bei 60KHz anregen, so muss das elektronische Betriebsgerät die Lampe genau mit der halben Betriebswechselfrequenz bei 30kHz sinusförmig betreiben. Das Amplitudenspektrum dieser Versorgungsspannung bzw. dieses Versorgungsstroms würde bei 30kHz eine singuläre Frequenzkomponente aufweisen, während das zugehörige Leistungsspektrum, also das Spektrum des Produkts aus Strom und Spannung, neben der allgemeinen Leistungslinie bei Null, genau bei der doppelten Frequenz, also bei 60kHz eine singuläre Frequenzlinie aufweisen wird, mit der dann die entsprechende akustische Mode in der Lampe angeregt wird.

Meist wird zur gezielten Dosierung der Anregung die Anregungsfrequenz im EVG leicht gesweept oder gewobbelt, typischerweise +-5kHz, damit die tatsächliche Frequenzlage der gewünschten Mode auf jeden Fall getroffen wird. Die Sweepwiederholungsrate liegt dabei gängigerweise bei ca.100Hz und kann bei Bedarf auch auf die Netzversorgung einsynchronisiert werden. Der Vorteil bei dieser Methode ist, dass die sogenannten Direkt-Drives mit einfachen Schaltanordnungen wie z.B. einer Halbbrücke realisiert werden können und das EVG damit mit geringerem elektronischen Aufwand aufgebaut werden kann. Der Nachtteil bei der Methode des Direkt-Drives ist der, dass es relativ schwierig ist, die Anregungsstärke der gewünschten akustischen Eigenmode zu steuern, da beim direkten Betrieb der Durchmodulationsgrad stets 100% beträgt und die beiden Freiheitsgrade, die Größe des Sweepbereichs oder die Wiederholfrequenz des Sweeps, nur bedingt ausgenützt werden können.

Die Größe des Sweepbereichs lässt sich nicht beliebig verbreitern, da meist in unmittelbarer Nähe der angezielten und bogenbegradigungsaktiven Linie sich weitere akustische Eigenfrequenzen befinden, die möglichst nicht getroffen werden sollten, da diese bei Anregung mit ihrer negativen Auswirkung auf die Bogenstabilität sich dann nachteilig bemerkbar machen würden.

Die Sweepwiederholungsrate bzw. die Sweepwiederholfrequenz lässt sich in der Regel auch nicht beliebig erniedrigen, da unvermeidliche Leistungsschwankungen während des Sweepvorgangs sich regelungstechnisch nur mit hohem Aufwand exakt kompensieren lassen und diese Leistungsschwankungen sich gerade bei Frequenzen <50Hz als Fluktuation im Licht bemerkbar machen würden.

Eine alternative Methode zur gezielten und wohldosierten Anregung einer speziellen akustischen Eigenfrequenz des Entladungsbogens mittels des Betriebsgeräts lässt sich dagegen mit dem Rechteckbetrieb erreichen. Man spricht hier von der Rechteck-Amplitudenmodulation. Im niederfrequenten Rechteckbetrieb muss zur elektrischen Anregung einer speziellen Lampeneigenfrequenz die entsprechende Frequenzkomponente als Amplitudenmodulation auf die rechteckförmige Lampenversorgung additiv aufgesetzt werden.

Bei dieser Modulationsmethode deckt sich die aufmodulierte Frequenzkomponente betragsmäßig mit dem Wert der tatsächlichen Eigenfrequenz in der Lampe und die aufmodulierte Frequenzkomponente erscheint direkt im Leistungsspektrum des Rechtecksignals. Eine Frequenzverdopplung wie beim Direkt-Drive gibt es hierbei nicht.

Liegt beispielsweise die tatsächliche Eigenfrequenz in der Lampe bei 60kHz, so muss die aufmodulierte Frequenzkomponente ebenfalls bei 60kHz liegen. Damit die Linie auf alle Fälle getroffen wird, wird in der Regel ebenfalls ein kleiner Sweepbereich vorgesehen, so dass Streuungen der Lampengeometrie oder Streuungen der Füllungseigenschaften abgedeckt werden.

Bezüglich der gewünschten Stärke der Anregung hat man hierbei durch die Wahl der Modulationstiefe einen klaren Parameter, mit dem man die Anregungsstärke beliebig und unabhängig von anderen Gegebenheiten verändern kann, so dass die gezielte Anregung oder weitere negative Nebeneffekte zum gewünschten Effekt des Arc-Straightening führt. Ein Nachteil der Amplitudenmodulation im Rechteckbetrieb ist aber im Allgemeinen deren technisch aufwändige Realisierung im elektronischen Betriebsgerät, weshalb sie bislang in der Regel in elektronischen Betriebsgeräten kaum umgesetzt wird.

Zu dieser alternativen Methode gibt es im Stand der Technik verschiedene Schriften, die aber alle einen eher formalen Charakter besitzen, indem der Sachverhalt einer Amplitudenmodulation zum Zwecke der Bogenbegradigung beschrieben wird, und die technische Implementierung nur mit schematischen Prinzipschaltungen dargestellt wird, die aber kaum als kostengünstige und marktfähige Lösung umsetzbar sind.

In der US 6147461 wird z.B. als technische Lösung ein Verfahren beschrieben, bei dem die Versorgungsspannung einer Vollbrücken-Schaltung, die gängigerweise als Auskoppelstufe zum rechteckförmigen Betrieb einer Hochdruckentladungslampe dient, mit einer modulierten Gleichspannungsversorgung betrieben wird, wobei die Modulation als Überlagerung auf dem Rechtecksignal der Lampenversorgung auftritt.

Zur Erzeugung der Amplitudenmodulierten Gleichspannungsversorgungsspannung wird eine separate Modulationsstufe in der Form eines Standard-Tiefsetzer-Konverters verwendet, der mit der anvisierten Modulationsfrequenz betrieben wird. Die Glättungscharakteristik wird dabei mit dem Glättungskondensator so abgestimmt, dass die Betriebsfrequenz der Tiefsetzerstufe nicht vollständig ausgefiltert wird und damit als Residium in der gewünschter Tiefe auf dem Gleichstrompegel der Versorgungsspannung verbleibt.

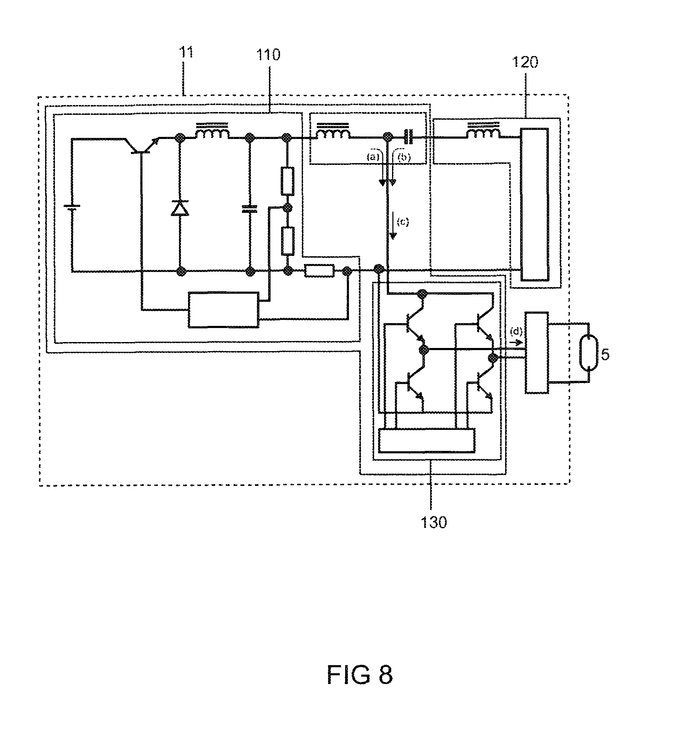

**Fig. 8** zeigt die Prinzip-Schaltung der Schaltungsanordnung 11 nach dem Stand der Technik. Die Schaltungsanordnung 11 besteht aus einem Gleichspannungswandler 110, einer Wechselspannungserzeugungseinheit 120 und einer Vollbrückenanordnung 130. In dieser Ausführung weist die dargelegte Schaltung zunächst mindestens 2 Drosseln und 5 Schalter auf. Wird hier der Aufbau einer Leistungsfaktorkorrekturschaltung und der Aufbau einer Zündeinheit mitberücksichtigt, so würde ein elektronisches Betriebsgerät mit dieser Topologie mindestens 3 Drosseln und 7 bis 8 Schalter benötigen, was hohe Kosten verursacht. Die Modulationstiefe wird hier durch die Beschaltung vorgegeben und lässt sich während des Betriebs nicht mehr über eine Software-Steuerung stufenlos verstellen.

Übliche elektronische Betriebsgeräte ohne Amplitudenmodulation lassen sich in der Regel mit weniger als 6 Schaltern realisieren. Die nach dem Stand der Technik vorgeschlagene Methode der Modulation der Versorgungsspannung für eine Schaltungsanordnung mit einer Vollbrücke lässt sich auch auf andere Schaltungstopologien übertragen, die zur Erzeugung einer Rechteck-Versorgungsspannung für eine Hochdruckentladungslampe herangezogen werden.

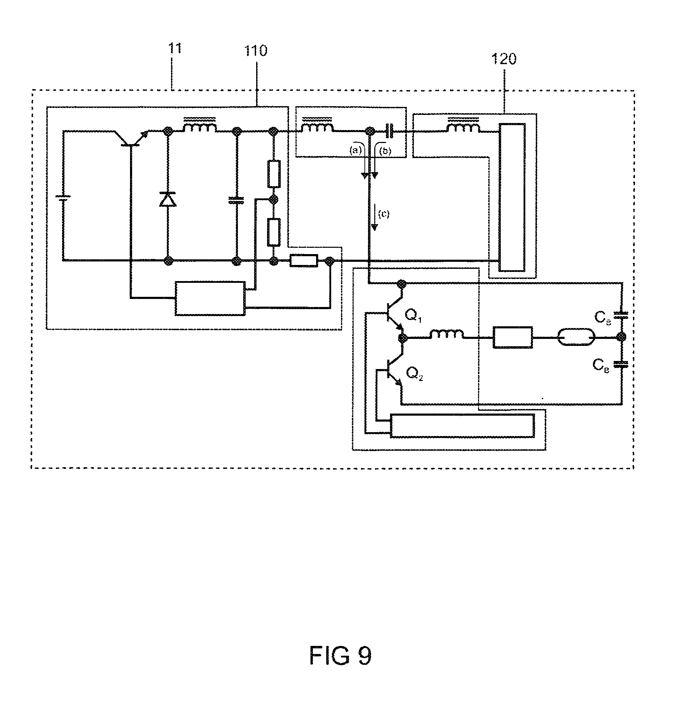

Nach dem Stand der Technik gibt es neben dem Vollbrückenkonzept zur Erzeugung einer unmodulierten Rechteckspannung noch weitere Konzepte. Eines davon basiert auf der Technik einer Halbbrückenschaltung mit hinreichend großen Blockkondensatoren. Bei diesem Konzept, das in **Fig. 9** dargestellt ist, werden die beiden Schalter Q1, Q2 der Halbbrücke komplementär im Takt der gewünschten niederfrequenten Rechteckspannung betrieben, wobei die gegenüberliegenden Blockkondensatoren C_{B} in ihrer Kapazität so groß gewählt wurden, damit sie den Strom durch die Lampe während der langen Vorwärtsphase vollständig aufnehmen können und ihn während der anschließenden Rückwärtsphase durch die Lampe vollständig wieder abgeben können. Die Lade- sowie Entladezeit der Blockkondensatoren C_{B} beträgt hierbei 2*5ms, was einer Frequenz von 100Hz entspricht. Die Schaltungsanordnung mit einer Halbbrücke 131 und großen Blockkondensatoren C_{B} ist zum Zwecke der Aufprägung einer Amplitudenmodulation ebenfalls mit einer Wechselspannungserzeugungseinheit 120 ausgerüstet, wobei diese Modulation dann additiv auf dem zur Lampe gehenden Rechteckstrom wirksam wird. Die dargelegte Schaltung besteht zunächst aus 2 Drosseln und 3 Schaltern. Wird der Aufbau einer Leistungsfaktorkorrekturschaltung und der Aufbau einer Zündeinheit mitberücksichtigt, so würde ein elektronisches Betriebsgerät mit dieser Topologie mindestens 3 Drosseln und 5 bis 6 Schalter aufweisen. Die Modulationstiefe wird in der Regel durch die Beschaltung vorgegeben und lässt sich auch hierbei während des Betriebs nicht mehr über eine Software-Steuerung stufenlos verstellen. Übliche Betriebsgeräte in dieser Halbbrücken-Topologie ohne Amplitudenmodulation lassen sich in der Regel mit weniger als 4 Schaltern realisieren.

### Aufgabe

Es ist Aufgabe der Erfindung, eine Schaltungsanordnung zum Betreiben einer Hochdruckentladungslampe mit einem begradigten Bogen anzugeben, aufweisend mindestens einen ersten (Q1) und einen zweiten elektronischen Schalter (Q2) in Halbbrückenanordnung, einen Versorgungsspannungsanschluss und einen Bezugsmassenanschluss zum Versorgen der Halbbrückenanordnung mit einem Gleichspannungssignal (U₀), einen Lastkreis (9), der eine Lampendrossel (L₁) und eine Blockkapazität (7) umfasst und einerseits an den Halbbrückenmittelpunkt und andererseits an mindestens einen Anschluss zum Anschließen der Hochdruckentladungslampe (5) gekoppelt ist und eine Ansteuerschaltung (8) zur Bereitstellung zumindest eines ersten und eines zweiten Ansteuersignals für den ersten (Q1) und den zweiten elektronischen Schalter (Q2), bei der die Modulationstiefe während des Betriebs stufenlos einstellbar ist und die kostengünstig herzustellen ist.

Es ist ebenfalls Aufgabe der Erfindung, ein Verfahren zum Betreiben einer Hochdruckentladungslampe anzugeben, das mit der Schaltungsanordnung ausführbar ist und über das die Modulationstiefe während des Betriebs stufenlos eingestellt werden kann.

### Darstellung der Erfindung

Die Lösung der Aufgabe bezüglich der Schaltungsanordnung erfolgt erfindungsgemäß mit einer Schaltungsanordnung zum Betreiben einer Hochdruckentladungslampe mit einem begradigten Bogen, mit mindestens einem ersten und einem zweiten elektronischen Schalter in einer ersten Halbbrücke, einem Versorgungsspannungsanschluss und einem Bezugsmassenanschluss zum Versorgen der Halbbrückenanordnung mit einem Gleichspannungssignal, einem Lastkreis, der eine Lampendrossel und eine Blockkapazität aufweist und einerseits an den Halbbrückenmittelpunkt und andererseits an mindestens einen Anschluss zum Anschließen der Hochdruckentladungslampe gekoppelt ist; einer Ansteuerschaltung zur Bereitstellung zumindest eines ersten und eines zweiten Ansteuersignals für den ersten und den zweiten elektronischen Schalter, wobei das erste und zweite Ansteuersignal pulsweitenmodulierte Signale gleicher Frequenz sind, und die Pulsweiten der beiden Ansteuersignale und die Phasenlagen der beiden Ansteuersignale zueinander jeweils unabhängig voneinander einstellbar sind und die beiden Ansteuersignale jeweils in einem niederfrequenten Takt invertiert werden. Dadurch, dass beide Schalter mit hochfrequenten pulsweitenmodulierten Signalen angesteuert werden, die mit niedriger Frequenz invertiert werden, und in der Phasenlage zueinander sowie in der Pulsweitenmodulation individuell einstellbar sind, kann eine frei einstellbare Amplitudenmodulation des erzeugten Betriebsrechtecksignals für die Hochdruckentladungslampe erzeugt werden.

Dabei ist im Lastkreis der erfindungsgemäßen Schaltungsanordnung vorteilhafter Weise eine Blockkapazität aus einem Blockkondensator, der in Serie zur Entladungslampe geschaltet ist, eingesetzt. Die erfindungsgemäße Schaltungsanordnung funktioniert besonders gut, wenn im Lastkreis eine Blockkapazität aus zwei Blockkondensatoren eingesetzt wird, die symmetrisch von der Entladungslampe an die Versorgungsspannungsanschlüsse angeschlossen sind. Dadurch wird die an die Hochdruckentladungslampe angelegte Spannung besonders gut symmetrisiert.

Wenn die Schaltungsanordnung eine zweite Halbbrücke mit einem dritten und einem vierten elektronischem Schalter aufweist, die einen Resonanzkreis zum Zünden der Gasentladungslampe anregt, kann eine vorteilhafte Resonanzzündung für die Hochdruckentladungslampe verwendet werden. Die zweite Halbbrücke ist dabei vorteilhaft zwischen den Mittelpunkt der ersten Halbbrücke und der Schaltungsmasse angeordnet. Der dritte und der vierte elektronische Schalter der zweiten Halbbrücke ist dabei vorzugsweise ebenfalls von der Ansteuerschaltung angesteuert.

Die Lösung der Aufgabe bezüglich des Verfahrens erfolgt erfindungsgemäß mit einem Verfahren zum Betreiben einer Hochdruckentladungslampe mit einer oben beschriebenen Schaltungsanordnung, bei dem während des Betriebs der Gasentladungslampe folgende Schritte ablaufen:
- Ansteuern des ersten und zweiten elektronischen Schalters mit einem ersten und zweiten Ansteuersignal, wobei die Ansteuersignale pulsweitenmodulierte Signale gleicher Frequenz sind,
- Einstellen der Tastverhältnisse der Ansteuersignale,
- Einstellen der Phasenlage der beiden Ansteuersignale zueinander,
- Invertieren der beiden Ansteuersignale in einem niederfrequenten Takt. Mit diesem Verfahren wird an der Hochdruckentladungslampe eine niederfrequente Rechteckspannung angelegt, die eine hochfrequente Amplitudenmodulation aufweist, die mittels des Verfahrens einfach und stufenlos eingestellt werden kann. Bevorzugt lässt sich dabei das Tastverhältnis des Ansteuersignals jeweils für den ersten elektronischen Schalter und den zweiten elektronischen Schalter separat und unabhängig voneinander einstellen. In einer darauf aufbauenden bevorzugten Ausbildung wird das Tastverhältnis beziehungsweise die Phasenlage während des Betriebes noch variiert. Dies kann z.B. notwendig sein, um auf geänderte Randbedingungen, wie z.B. der Eingangsspannung zu reagieren.

Zum Zünden der Hochdruckentladungslampe werden bevorzugt folgende Schritte ausgeführt. Zu diesem Zweck muss die Schaltungsanordnung eine zweite Halbbrücke mit einem dritten und einem vierten elektronischem Schalter sowie einen Resonanzkreis aufweisen:
- Schließen des ersten elektronischen Schalters und Öffnen des zweiten elektronischen Schalters,
- Ansteuern der zweiten Halbbrücke derart, dass der Resonanzkreis angeregt wird und eine Spannung erzeugt, die an die Gasentladungslampe angelegt zum Zünden der Gasentladungslampe (5) führt,
- Einschalten des dritten elektronischen Schalters und Ausschalten des vierten elektronischen Schalters, sowie Betreiben der ersten Halbbrücke nach dem oben beschriebenen Verfahren. Mit diesem Verfahren wird eine vorteilhafte Resonanzzündung der Hochdruckentladungslampe durchgeführt.

Wenn folgende Schritte ausgeführt werden, wird die Hochdruckentladungslampe nicht nur durch eine Resonanzzündung gestartet, sondern auch gleich mit einer vorteilhaften Hochlaufkurve betrieben. Zu diesem Zweck muss die Schaltungsanordnung eine zweite Halbbrücke mit einem dritten und einem vierten elektronischem Schalter sowie einen Resonanzkreis aufweisen:
- Schließen des ersten elektronischen Schalters und Öffnen des zweiten elektronischen Schalters,
- Ansteuern der zweiten Halbbrücke derart, dass der Resonanzkreis angeregt wird und eine Spannung erzeugt, die an die Gasentladungslampe angelegt zum Zünden der Gasentladungslampe führt,
- Ansteuern der zweiten Halbbrücke mit einer vorbestimmten Frequenz derart, dass eine vorbestimmte Leistung in die Gasentladungslampe fließt,
- Einschalten des dritten elektronischen Schalters und Ausschalten des vierten elektronischen Schalters, sowie Betreiben der ersten Halbbrücke nach dem oben beschriebenen Verfahren.

Diese beiden gerade beschriebenen Zündverfahren werden zum Starten der Hochdruckentladungslampe ausgeführt, bevor der eigentliche erfindungsgemäße Lampenbetrieb durchgeführt wird.

Weitere vorteilhafte Weiterbildungen und Ausgestaltungen der erfindungsgemäßen Schaltungsanordnung und des erfindungsgemäßen Verfahrens zum Betreiben einer Hochdruckentladungslampe ergeben sich aus weiteren abhängigen Ansprüchen und aus der folgenden Beschreibung.

### Kurze Beschreibung der Zeichnung(en)

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:
Fig. 1 eine erfindungsgemäße Schaltungsanordnung zur Erzeugung eines Amplitudenmodulierten Wechselstromsignals zum Betreiben einer Gasentladungslampe in einer ersten Ausführungsform mit einer Halbbrückenanordnung mit einem Blockkondensator,
Fig. 2a-e einige Ansteuersignale während des Vorwärtsbetriebes (oberer Transistor leitend) bei niedriger Amplitudenmodulation,
Fig. 3a-e einige Ansteuersignale während des Vorwärtsbetriebes (oberer Transistor leitend) bei hoher Amplitudenmodulation,
Fig. 4a-e einige Ansteuersignale während des Rückwärtsbetriebes (unterer Transistor leitend) bei niedriger Amplitudenmodulation,
Fig. 5a-e einige Ansteuersignale während des Rückwärtsbetriebes (unterer Transistor leitend) bei hoher Amplitudenmodulation,
Fig. 6 eine erfindungsgemäße Schaltungsanordnung zur Erzeugung eines amplitudenmodulierten Wechselstromsignals zum Betrieb einer Gasentladungslampe in einer zweiten Ausführungsform mit einer Halbbrückenanordnung mit zwei symmetrisch angeordneten Blockkondensatoren,
Fig. 7 eine erfindungsgemäße Schaltungsanordnung zur Erzeugung eines Amplitudenmodulierten Wechselstromsignals zum Betreiben einer Gasentladungslampe in einer dritten Ausführungsform mit einer Halbbrückenanordnung mit zwei symmetrisch angeordneten Blockkondensatoren und einer Resonanzzündvorrichtung,
Fig. 8 eine Schaltungsanordnung nach dem Stand der Technik zur Erzeugung eines Amplitudenmodulierten Wechselstromsignals zum Betreiben einer Gasentladungslampe in einer Vollbrückenanordnung,
Fig. 9 eine Schaltungsanordnung nach dem Stand der Technik zur Erzeugung eines Amplitudenmodulierten Wechselstromsignals zum Betreiben einer Gasentladungslampe in einer Halbbrückenanordnung.

### Bevorzugte Ausführung der Erfindung

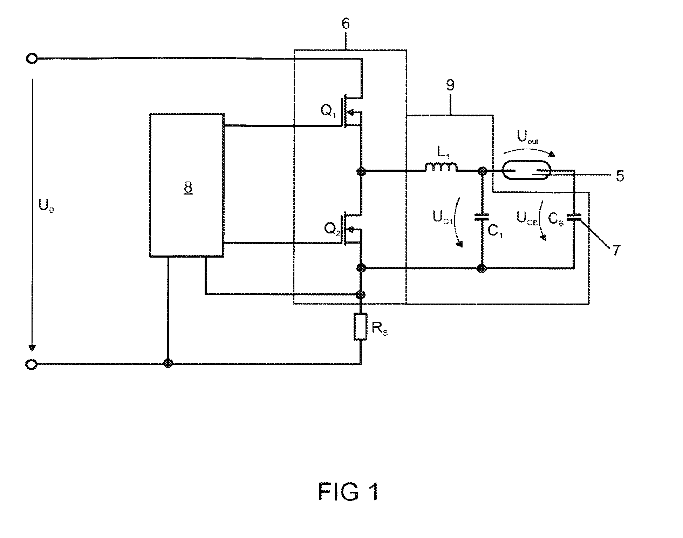

**Fig. 1** zeigt eine erfindungsgemäße Schaltungsanordnung zur Erzeugung eines Amplitudenmodulierten Wechselstromsignals zum Betreiben einer Gasentladungslampe in einer ersten Ausführungsform mit einer Halbbrückenanordnung mit einem Blockkondensator. Diese Schaltungsanordnung beinhaltet ein Konzept, bei dem eine rechteckförmige Stromversorgung für eine Lampe erzeugt werden kann, auf der sich additiv eine Amplitudenmodulation aufprägen lässt und bei dem die Amplitudenmodulationstiefe per Software-Steuerung stufenlos eingestellt werden kann. Das rechteckförmige Signal weist eine sehr niedrige Frequenz auf (ca. 50-150Hz), während das aufmodulierte Signal eine hohe Frequenz einstellbar im Bereich um die 60kHz aufweist. Das Grundkonzept der Schaltungsanordnung kommt mit zwei MOS-FETs (Feldeffekttransistoren) aus, was sich bei Betrachtung eines Gesamtkonzeptes für ein elektronisches Betriebsgerät mit Leistungsfaktorkorrekturschaltung und Zündschaltung auf weniger als fünf MOS-FETs erhöhen würde. Die erfindungsgemäße Schaltungsanordnung weist eine Halbbrückenanordnung 6 mit zwei MOS-FETs auf, an die ein Lastkreis 7 zur Versorgung einer Gasentladungslampe 5 angeschlossen ist. Der Lastkreis 7 weist eine Lampendrossel L₁, einen Kondensator C₁ und einen Blockkondensator C_{B} auf. Die Halbbrückenanordnung 6 wird von einer Versorgungsspannung gespeist, die über einen Versorgungsspannungsanschluss und einen Bezugsmassenanschluss zum Versorgen der Halbbrückenanordnung 6 mit einem Gleichspannungssignal U₀ zugeführt wird. Ein Mikrocontroller 8 dient zum Steuern der Schaltungsanordnung und erzeugt ein erstes und zweites Ansteuersignal für den ersten MOS-FET Q1 und den zweiten MOS-FET Q2. Ein Strommesswiderstand R_{S} ist in Serie zur Halbbrücke 6 geschaltet, wobei der Mikrocontroller 8 die Spannung über dem Strommesswiderstand R_{S} abgreift.

Die Schaltungsanordnung nach **Fig. 1** erzeugt an der Gasentladungslampe 5 eine niederfrequente Rechteckspannung mit über die Programmierung des Mikrocontrollers 8 einstellbarer Amplitudenmodulationstiefe. Die Schaltungsanordnung beruht auf dem Prinzip des Halbrücken-Inverters mit einem großen Blockkondensator C_{B}. Die Größe bzw. die Kapazität des Blockkondensators muss so gewählt werden, dass der an ihm sich einstellende Gleichspannungslevel während des gesamten langen Rechteck-Zyklus (ca. 5ms) weitgehend konstant bleibt. Der Gleichspannungslevel am Blockkondensator liegt im stationären Zustand bei ca. UCB=½*U₀. Die Amplitudenmodulation wird hierbei aber nicht über eine separate Modulationsstufe wie im Eingangs erwähnten Stand der Technik bewerkstelligt, sondern dadurch, dass die beiden MOS-FETs Q1, Q2 während der jeweiligen Halbzyklen jeweils so angesteuert werden, dass sich an der Lampe die gewünschte Strom -bzw. Spannungshöhe einstellt, und gleichzeitig der Lampenstrom in der gewünschten Tiefe moduliert wird. Die Amplitudenmodulationstiefe kann dabei ebenfalls über die Ansteuerung der beiden Halbbrücken-MOS-FETs eingestellt werden. Die hierzu erforderlichen Schaltsequenzen zur Ansteuerung der Gates werden in einem Mikrokontroller softwaretechnisch erzeugt und werden von dort über handelsübliche Gate-Treiberstufen den Gates zugeführt. Die einzelnen Schritte zur Umsetzung dieses Verfahrens werden im folgendem dargestellt:

Zunächst wird die Halbbrücke mit einer konstanten Zwischenkreisspannung U₀ versorgt. Die Zwischenkreisspannung U₀ wird von einer Leistungsfaktorkorrekturschaltung (nicht gezeigt) bereitgestellt und beträgt typischerweise U₀=400VDC bis 500VDC. Anschließend werden die beiden rechteckförmigen niederfrequenten Stromzyklen über die jeweiligen Schaltschemen der beiden MOS-MOS-FETs bewerkstelligt. Vorwärts und Rückwärtsphasen des niederfrequenten Signals dauern hierbei, wie oben bereits erwähnt jeweils ca. 5msec. Beim Vorwärtszyklus wird der obere MOS-FET Q1 im Sinne eines Tiefsetzerschalters angesteuert, wobei die Schaltfrequenz f_{mod}=1/T_{mode}=1/T konstant gehalten wird. Die konstante Betriebsfrequenz des MOS-FETs Q1 entspricht der anvisierten Modulationsfrequenz. Die gewählte Betriebsfrequenz kann natürlich auch ohne Einschränkung im Sinne der gesweepten Amplitudenmodulationsfrequenz leicht variiert, bzw. gesweept werden, z.B. um +-5kHz.

Die Einschaltzeit t₁ des oberen MOS-FETs Q1, also die Pulsdauer tₒₙ des ersten Ansteuersignals wird zunächst so gewählt, dass die Tiefsetzbedingung v=Uₒᵤₜ/U₀=tₒₙ/T vorliegt, also tₒₙ<=(Uₒᵤₜ/U₀)*T. Für Modulationsfrequenz f_{mod}=60kHz würde sich eine Periodendauer von T=16µs ergeben und bei einer gewünschten Tiefsetzung der Ausgangsspannung Uₒᵤₜ von U₀=450V auf Uₒᵤₜ=340V würde sich eine Pulsdauer von tₒₙ=12.6 µs ergeben. Der sich während dieser Einschaltzeit in der Drossel L₁ einstellende maximale Strom Iₘₐₓ ergibt sich aus (U₀-Uₒᵤₜ)=L₁*Iₘₐₓ/tₒₙ bzw. Iₘₐₓ= (1/Li)*(U₀-Uₒᵤₜ)*tₒₙ mit U₀=450V und Uₒᵤₜ=340V und (U₀-Uₒᵤₜ)=(450V-345V)=110V und mit L₁=0.5mH ergibt sich Imax zu 2,77A.

Am Ende dieser kurzen Einschaltphase beginnt die allgemeine Stromfreilaufphase in der Tiefsetzerdrossel. Die Dauer t_{frei} des Freilaufs hängt von der momentanen Ausgangsspannung Uₒᵤₜ und dem Wert der Induktivität L₁ ab. Es gilt Uₒᵤₜ = L₁*Iₘₐₓ/t_{frei} bzw. t_{frei}= L₁*Iₘₐₓ/Uₒᵤₜ. Mit den obigen Werten ergibt sich eine Freilaufzeit t_{frei}=4.0µs. Im Ergebnis wäre also die Tiefsetzerdrossel bei diesen Bedingungen nach 4.0µs freigelaufen und der Beginn der nächsten Öffnungszeit könnte somit umgehend erneut eingeleitet werden. In diesem Zustand kann die Halbbrücke bei konstanter Betriebsfrequenz entsprechend dem Prinzip eines gewöhnlichen Tiefsetzers arbeiten, wobei als Last die zum Blockkondensator C_{b} geschlossene Lampe vorliegt. Wegen der großen, aber doch begrenzten Kapazität des Blockkondensators C_{B} muss nach einer gewissen Zeit, hier also nach 5ms, eine Kommutierung, d.h. die Umkehrung der Stromrichtung eingleitet werden, was ja auch aus lampentechnischen Gründen erwünscht ist.

Die Kommutierung wird einfach dadurch bewerkstelligt, dass die momentan für den Vorwärtzyklus verwendeten Ansteuerungssequenzen spiegelbildlich an den beiden Gates ausgetauscht werden und die Halbbrücke jetzt statt eines von U₀ ausgehenden Tiefsetzstellers als ein von Schaltungsmasse ausgehender Hochsetzsteller fungiert. Im Vorwärtszyklus wurde z.B. von U₀ ausgehend um 110V nach unten auf 340V tiefgesetzt, im Rückwärtszyklus wird nun ausgehend von Schaltungsmasse um 110V nach oben auf 110V hochgesetzt. Die Amplitudenmodulation am Ausgang der Halbbrücke kann dabei auf folgende Weise variiert werden: Zunächst wird die Größe des Glättungs-Kondensators C₁ am Ausgang so gewählt, dass sich bei einer Grundvorgabe der Schaltzeitwerte ein mittlerer Zielwert einer Amplitudenmodulation einstellt, um den herum dann variiert werden kann. Hält man nun den unteren MOS-FET Q₂ über die natürliche Freilaufzeit hinaus (z.B. 4.0µs+xµs) weiterhin aktiv im leitenden Zustand, wird der Glättungskondensator C₁ in geringem Maße über die Drossel und den unteren MOS-FET rückwärts entladen, was sich im Ergebnis als eine erhöhte Modulationsschwankung auf dem Glättungskondensator C₁ auswirkt.

Die Dauer des leitenden Zustands des unteren MOS-FETs Q₂ über die natürliche Freilaufzeit hinaus bestimmt also die Amplitudenmodulationstiefe auf dem Glättungskondensator C₁ am Ausgang der Drossel L₁. Die Einschaltzeit des oberen MOS-FETs Q₁ muss natürlich in gleicher Weise nach hinten verschoben werden, damit der Einschaltvorgang weiterhin unter schaltentlasteten Bedingungen stattfinden kann. Eine Leistungsabsenkung, die diese Nachjustierung mit sich bringt, muss mit einer vor der erfindungsgemäßen Schaltungsanordnung angeordneten Leistungsfaktorkorrekturschaltung durch die Nachregelung der Eingangsspannung, in diesem Fall Zwischenkreisspannung U₀ abgefangen werden. Will man nun nach 5ms mit der Kommutierung die umgekehrte Stromrichtung einleiten, so muss, wie bereits gesagt, das eben aufgezeigte Schaltschema genau spiegelbildlich auf die beiden MOS-FETs Q₁ und Q₂ übertragen werden, das heisst, das Ansteuersignal muss invertiert werden. Die resultierende Signalentwicklung ist zur Vorwärtsphase spiegelbildlich identisch.

Durch den alternierenden Betrieb der Halbbrücke sowohl als Tiefsetzsteller und als auch als Hochsetzsteller kann die Halbbrücke in Kombination mit einem großen Blockkondensator C_{B} als Rechteckgenerator verwendet werden. Die Kommutierung der Stromrichtung durch den Betriebswechsel von Tiefsetzsteller auf Hochsetzsteller wird durch die Spiegelung beziehungsweise Invertierung der Signalsequenzen an den Gates der MOS-FETs Q₁ und Q₂ bewerkstelligt. Durch die ausgewogenen Schaltsequenzen lässt sich die Halbbrücke mit einer konstanten Betriebsfrequenz betreiben. Durch die geeignete Wahl des Glättungskondensators C₁ lässt sich auf dem erzeugten Rechteckversorgungssignal vorab eine bestimmte Amplitudenmodulation aufprägen. Die Amplitudenmodulationsfrequenz lässt sich durch die Wahl der Betriebsfrequenz für die Halbbrücke einstellen. Die Variation der Amplitudenmodulationstiefe lässt sich über das tₒₙ/t_{off}-Verhältnis per Software stufenlos einstellen. Die langsamen Leistungsänderungen an der Lampe, die mit diesen Amplitudenmodulationsvariationen einhergehen, können per Leistungsregelung der Ausgangsspannung U₀ der Leistungsfaktorkorrekturschaltung ausgeregelt werden.

Falls während des Betriebs beziehungsweise während der Hochlaufphase der Gasentladungslampe 5 die Amplitudenmodulation unerwünscht ist und komplett abgeschaltet werden soll, so kann die Betriebsfrequenz der Halbbrücke 6 vom Mikrocontroller 8 optional auf einen höheren Wert, z.B. 120 kHz, gesetzt werden, bei dem der Glättungskondensator C₁ die Amplitudenschwankungen voll ausglättet.

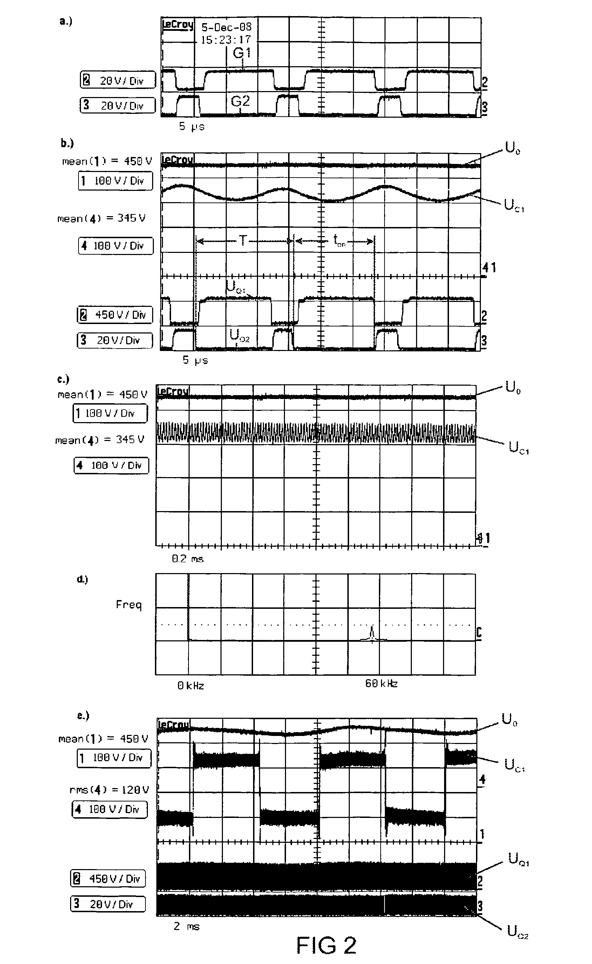

Die **Figuren 2a bis 2d** zeigen das Schema zur Ansteuerung der MOS-FETs Q₁, Q₂ im Vorwärtsbetriebes (oberer Transistor Q₁ leitend) bei niedriger Amplitudenmodulation und seine Auswirkungen auf den Betrieb. Die Gate-Signale U_{Q1}, U_{Q2} werden zusammen mit dem entsprechendem Verlauf der Steuersignale G1 und G2 sowie der entsprechenden Entwicklung der analogen Versorgungssignale U₀, U_{C1} dargestellt.

In Summe wird dargestellt, wie sich eine Amplitudenmodulation realisieren lässt und wie durch die Variation der komplementären Ein- und Ausschaltzeiten der beiden MOS-FETs Q1, Q2 innerhalb der vorgegebenen Periodendauer T sich die Amplitudenmodulationstiefe auf dem Rechtecksignal einstellen lässt.

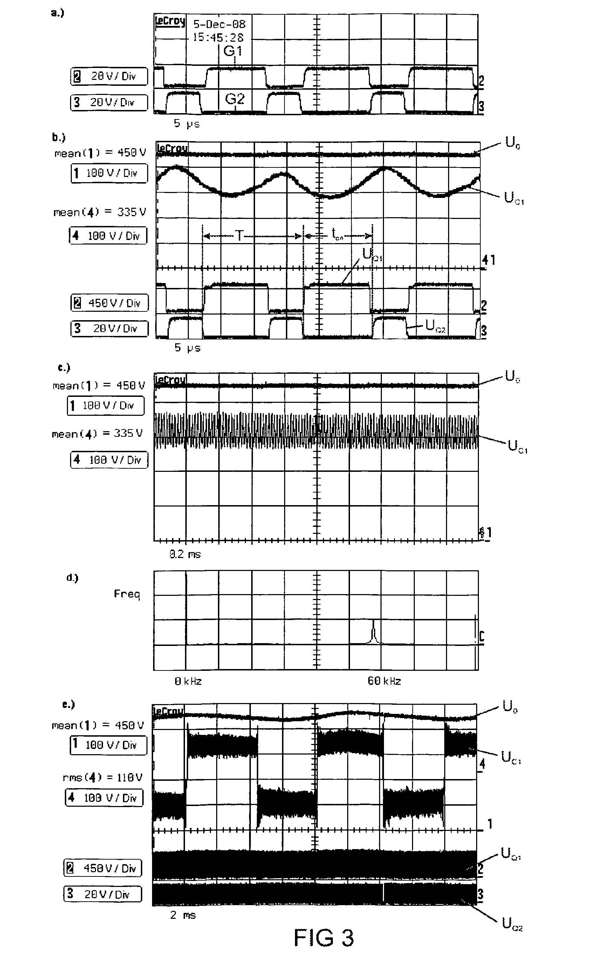

**Fig. 2a****-d** und **Fig. 3a****-d** zeigt die Situation im Vorwärtsbetrieb, wenn der Strom über die Lampe zum Blockkondensator fließt. Die Periodendauer beträgt T=16µs≡60kHz.

**Fig. 2** zeigt dabei den Vorwärtsbetrieb bei niedriger Amplitudenmodulation. Die Einschaltzeit des oberen MOS-FETs ist lang und die Einschaltzeit des unteren MOS-FETs ist kurz. Während der kurzen Einschaltzeit des unteren MOS-FETs ist die Entladung des Glättungs-Kondensators C₁ nur klein, wodurch die Schwankung auf dem Kondensator und damit der Amplitudenmodulationsgrad nur klein ist.

**Fig. 3** zeigt den Vorwärtsbetrieb bei höherer Amplitudenmodulation. Die Einschaltzeit des oberen MOS-FETs Q₁ ist kürzer und die Einschaltzeit des unteren MOS-FETs Q₂ ist länger. Während der längeren Einschaltzeit des unteren MOS-FETs Q₂ ist die Entladung des Glättungs-Kondensators C₁ höher, wodurch die Schwankung auf dem Kondensator und damit der Amplitudenmodulationsgrad hoch ist.

**Fig. 2a** und **Fig. 3a** zeigen die Gate-Signale G1, G2 wie sie direkt im Mikrocontroller erzeugt wurden. Die Ein/Ausschaltzeitpunkte während der vorgegeben Betriebs bzw. Modulationsfrequenz können per Software variiert werden. In **Fig. 2a** ist die Ausschaltzeit des oberen Signals G1 kürzer und die verbleibende Modulation wird kleiner sein. In **Fig. 3a** ist die Ausschaltzeit länger und die verbleibende Modulation wird größer sein.

**Fig. 2b** und **Fig. 3b** zeigen, wie die Halbbrücke von einer konstanten Zwischenkreisspannung U₀=450V versorgt wird, und wie sich infolge das Schaltschema an den Halbbrücken-MOS-FETs Q₁ und Q₂, und die tiefgesetzte Spannung auf dem Glättungskondensator C mit ihren verbleibenden Schwankungen entwickelt. Die verbleibende Modulation ist in **Fig. 2b** kleiner und in **Fig. 3b** größer. Im unteren Bereich sind die aus den Gate-Signalen G1, G2 erzeugten Ansteuersignale U_{Q1} und U_{Q2} dargestellt. Das Signal U_{Q2} entspricht dem Signal G2, das Signal U_{Q1} ist das vom Treiber aus dem Signal G1 erzeugte Signal.

**Fig. 2d** und **Fig. 3d** zeigen das Fourier-Spektrum dieser tiefgesetzten Spannung, die nun infolge der Amplitudenmodulation neben der allgemeinen Leistungslinie bei Null auch eine Linie bei f=60kHz aufweist. Die Modulationslinie ist in **Fig. 2c** niedriger, und in **Fig. 3c** höher.

Die **Fig. 2c****, e** und **Fig. 3c****, e** zeigen die Versorgungs sowie die Leistungssignale in geringeren Zeitauflösungen, so dass das Zusammenwirken zwischen der niederfrequenten Rechteckspannung und der hochfrequenten Modulationsspannung betrachtet werden kann. Vor allem die Spannung am Glättungskondensator U_{C1} zeigt die niederfrequente Rechteckspannung, die von der hochfrequenten Rechteckspannung moduliert wird besonders deutlich. In **Fig. 2e** ist der Modulationsgrad niedrig, in **Fig. 3e** ist er dagegen hoch.

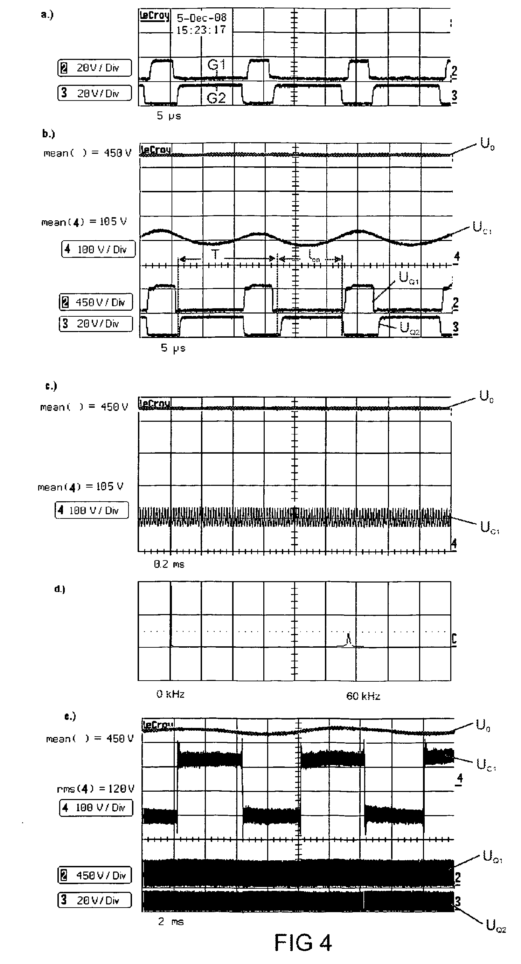

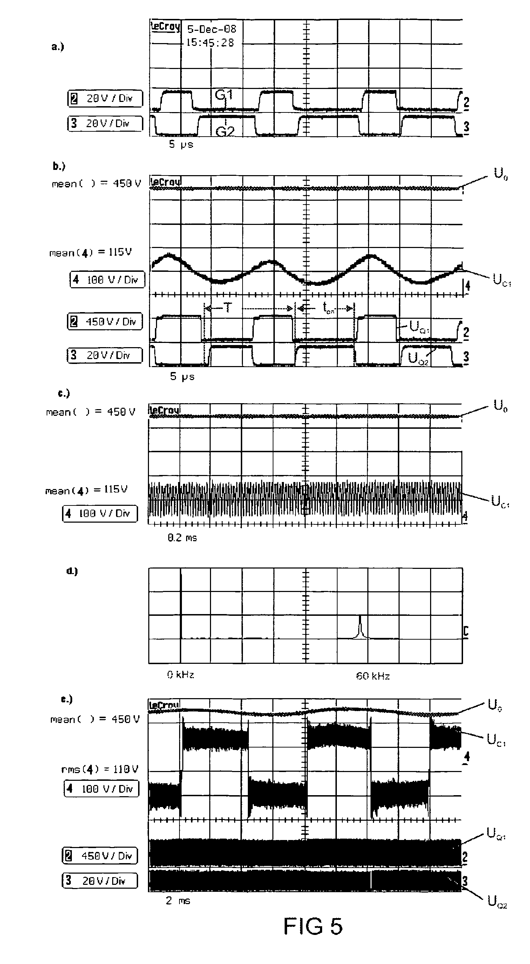

**Fig. 4** und **Fig. 5** zeigen die Situation im Rückwärtsbetrieb, wenn der Strom über die Lampe vom Blockkondensator C_{B} fließt. **Fig. 4** und **Fig. 5** sind zu **Fig. 2** und **Fig. 3** spiegelsymmetrisch. Es werden also die in **Fig. 2** und **Fig. 3** spiegelbildlich vertauschten Pulschemen gezeigt und wie sich die entsprechenden analogen Versorgungssignale entwickeln. Während im Vorwärtsfall bei **Fig. 2** und **Fig. 3** die tiefgesetzte Spannung am Glättungskondensator ausgehend von U₀=450V um ca. 110V tiefer gesetzt worden ist, werden im Rückwärtsfall bei **Fig. 4** und **Fig. 5** die Spannungen am Glättungskondensator ausgehend von Gnd=0V um ca. 110V nach oben gesetzt. Die Differenz der Ausgangsspannungen des Vorwärtsfalles und des Rückwärtsfalles wird am Ende der Lampe als rechteckige Betriebsspannung zugeführt, die in diesem Fall zusätzlich mit einer Amplitudenmodulation versehen ist. Gut zu sehen ist, dass die Ansteuersignale G1, G2, U_{Q1}, U_{Q2} gegenüber dem Vorwärtsbetrieb invertiert sind.

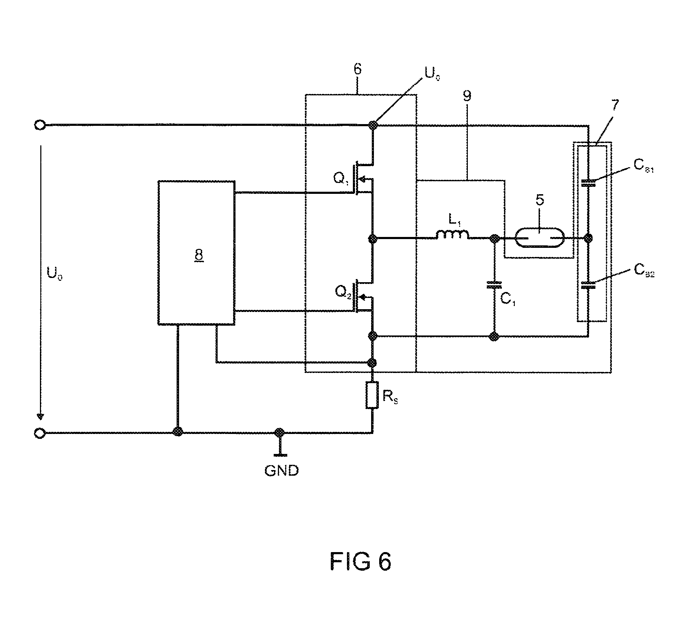

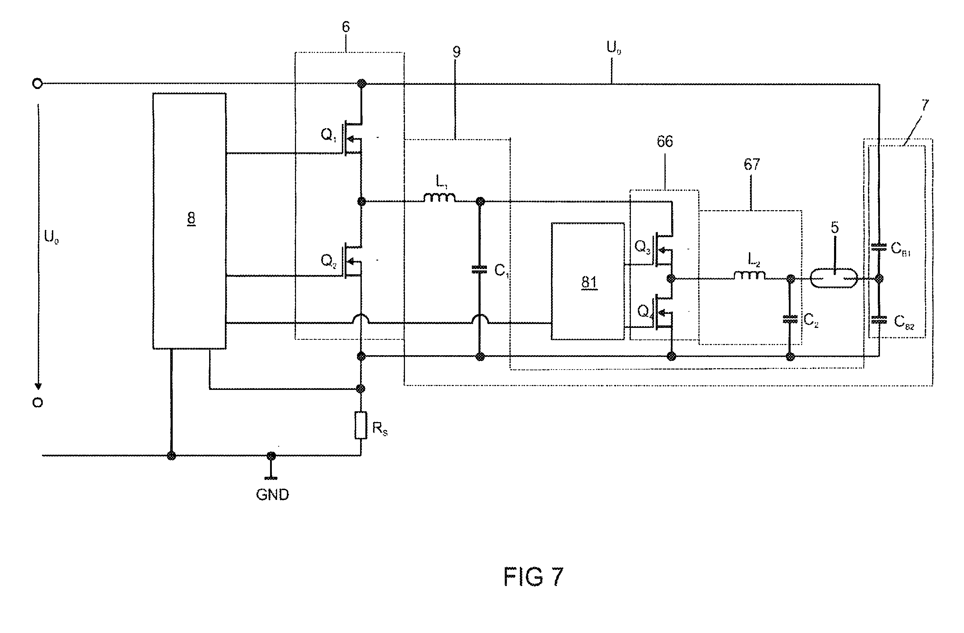

Die **Fig. 6** und **7** zeigen zwei weitere Ausführungsformen der erfindungsgemäßen Schaltungsanordnung auf: In **Fig. 6** wird im wesentlichen die Schaltungstopologie von **Fig. 1** gezeigt, mit dem Unterschied dass hier eine Blockkapazität 7 mit zwei Blockkondensatoren C_{B1}, C_{B2} verwendet wird, die im wesentlichen symmetrisch an U₀ und Gnd angeschlossenen sind. Diese Art der Blockkondensatorenankopplung zeigt beim Übergang in den stationären Zustand ein besseres Verhalten, da sich nach dem Einschalten die stationäre Blockspannung U_{CB}= ½*U₀ zwischen den beiden Blockkondensatoren C_{B1}, C_{B2} schneller aufbaut. Außerdem lässt sich in dieser Anordnung mit den beiden Blockkondensatoren C_{B1}, C_{B2} gleichzeitig noch die Zwischenkreisspannung U₀ abblocken, bzw. puffern.

**Fig. 7** zeigt eine dritte Ausführungsform der erfindungsgemäßen Schaltungsanordnung. Hier ist zusätzlich zur Halbbrücke 6 für den Betrieb der Gasentladungslampe 5 eine weitere Halbbrücke 66, bestehend aus Q₃, Q₄ zur Zündung der Gasentladungslampe 5 mittels einer Resonanzzündung eingebracht. Vor dem Lampenstart kann zur Zündung der Lampe standardmäßig die Resonanzzündspannung durch Anfahren der weiteren Halbbrücke 66 mit der Resonanzfrequenz erzeugt werden. Hierzu kann die Halbbrücke 6 im Vorwärtsbetrieb permanent auf eine konstante Ausgangsspannung gestellt werden, mit der dann die Zündhalbbrücke 66 versorgt wird. Der zusätzlich eingebrachte Zündresonanzkreis 67, bestehend aus einer Zünddrossel L₂ und einem Resonanzkondensator C₂, eignet sich auch gut zum Betrieb der Lampe während der Startphase bzw. der Lampenanlaufs, wobei sich der benötigte Strombedarf leicht über die Wahl der Betriebsfrequenz für die Zündhalbbrücke 66 einstellen lässt. Die Umschaltung auf den Rechteckbetriebmodus wird erst dann eingeleitet, wenn die Lampe bei ihrem Hochlauf nahezu in ihrem Nominalbereich ist, kurz bevor noch die akustischen Eigenresonanzen der Lampe aktiv werden. Nach dem Umschalten auf Rechteckbetrieb muss das Zündmodul natürlich inaktiv geschaltet werden, was sich dadurch realisieren lässt, dass der obere MOS-FET Q₃ im Zündkreis permanent auf eingeschaltet gestellt wird, während der untere MOS-FET Q₄ im Zündkreis permanent ausgeschaltet bleibt. In der nominalen Rechteckphase liegt die Zünddrossel L₂ dann nur noch als passive Drossel im Lampenkreis vor.

## Patentansprüche

1. Schaltungsanordnung zum Betreiben und zur Bogenbegradigung einer Hochdruckentladungslampe (5), mit
- mindestens einem ersten (Q1) und einem zweiten elektronischen Schalter (Q2) in einer ersten Halbbrücke (6) ;
- einem Versorgungsspannungsanschluss und einem Bezugsmassenanschluss zum Versorgen der Halbbrückenanordnung mit einem Gleichspannungssignal (U₀);
- einem Lastkreis (9), der eine Lampendrossel (L₁) und eine Blockkapazität (7) aufweist und einerseits an den Halbbrückenmittelpunkt und andererseits an mindestens einen Anschluss zum Anschließen der Hochdruckentladungslampe (5) gekoppelt ist;
- einer Ansteuerschaltung (8) zur Bereitstellung zumindest eines ersten (G1) und eines zweiten (G2) Ansteuersignals für den ersten (Q1) und den zweiten elektronischen Schalter (Q2),
- wobei das erste und zweite Ansteuersignal (G1, G2) pulsweitenmodulierte Signale gleicher Frequenz sind, und die beiden Ansteuersignale jeweils in einem niederfrequenten Takt invertierbar sind,
**dadurch gekennzeichnet, dass** das Tastverhältnis der beiden Ansteuersignale und die Phasenlagen der beiden Ansteuersignale zueinander jeweils unabhängig voneinander einstellbar sind.

2. Schaltungsanordnung nach Anspruch 1, **dadurch gekennzeichnet, dass** der Lastkreis eine Blockkapazität aus einem Blockkondensator (C_{B}) aufweist, der in Serie zu dem mindestens einen Anschluss der Hochdruckentladungslampe geschaltet ist.

3. Schaltungsanordnung nach Anspruch 1, **dadurch gekennzeichnet, dass** der Lastkreis eine Blockkapazität aus zwei Blockkondensatoren (C_{B1}, C_{B2}) aufweist, die symmetrisch von mindestens einem Anschluss der Hochdruckentladungslampe je an den Versorgungsspannungsanschluss und den Bezugsmassenanschluss angeschlossen sind.

4. Schaltungsanordnung nach einem der vorhergehenden Ansprüche, **dadurch gekennzeichnet, dass** die Schaltungsanordnung eine zweite Halbbrücke (66) mit einem dritten (Q3) und einem vierten (Q4) elektronischem Schalter zum Anregen eines Resonanzkreises (67) zum Zünden der Gasentladungslampe (5) aufweist, die zwischen den Mittelpunkt der ersten Halbbrücke (6) und einer Schaltungsmasse angeordnet ist.

5. Schaltungsanordnung nach Anspruch 4, **dadurch gekennzeichnet, dass** der dritte (Q3) und der vierte (Q4) elektronische Schalter der zweiten Halbbrücke (66) ebenfalls von der Ansteuerschaltung (8) ansteuerbar sind.

6. Verfahren zum Betreiben und zur Bogenbegradigung einer Hochdruckentladungslampe (5) mit einer Schaltungsanordnung nach einem der Ansprüche 1-5, **gekennzeichnet durch** folgende während des Betriebs der Gasentladungslampe (5) ablaufende Schritte:
- Ansteuern des ersten und zweiten elektronischen Schalters (Q1, Q2) mit einem ersten und zweiten Ansteuersignal (G1, G2), wobei die Ansteuersignale pulsweitenmodulierte Signale gleicher Frequenz sind,
- Variieren beziehungsweise Einstellen der Tastverhältnisse der Ansteuersignale (G1, G2) jeweils für den ersten elektronischen Schalter (Q1) und den zweiten elektronischen Schalter (Q2) separat und unabhängig voneinander,
- Einstellen und variieren der Phasenlage der beiden Ansteuersignale während des Betriebes zueinander,
- Invertieren der beiden Ansteuersignale in einem niederfrequenten Takt.

7. Verfahren nach Anspruch 6 zum Betreiben einer Schaltungsanordnung nach Anspruch 4, **gekennzeichnet durch** folgende zum Zünden der Hochdruckentladungslampe (5) ablaufende Schritte:
- Schließen des ersten elektronischen Schalters (Q1) und Öffnen des zweiten elektronischen Schalters (Q2),
- Ansteuern der zweiten Halbbrücke (66) derart, dass der Resonanzkreis (67) angeregt wird und eine Spannung erzeugt, die an die Anschlüsse der Hochdruckentladungslampe (5) zum Zünden der Hochdruckentladungslampe (5) führt,
- Einschalten des dritten elektronischen Schalters (Q3) und Ausschalten des vierten elektronischen Schalters (Q4).

8. Verfahren nach Anspruch 6, **gekennzeichnet durch** folgende zum Zünden der Hochdruckentladungslampe (5) ablaufende Schritte:
- Schließen des ersten elektronischen Schalters (Q1) und Öffnen des zweiten elektronischen Schalters (Q2),
- Ansteuern der zweiten Halbbrücke (66) derart, dass der Resonanzkreis (67) angeregt wird und eine Spannung erzeugt, die an die Anschlüsse der Hochdruckentladungslampe (5) zum Zünden der Hochdruckentladungslampe (5) führt,
- Ansteuern der zweiten Halbbrücke (66) mit einer vorbestimmten Frequenz derart, dass eine vorbestimmte Leistung in die Gasentladungslampe fließt,
- Einschalten des dritten elektronischen Schalters (Q3) und Ausschalten des vierten elektronischen Schalters (Q4).

## Claims

1. Circuit arrangement for operating and implementing arc leveling for a high-pressure discharge lamp (5) comprising
- at least a first electronic switch (Q1) and a second electronic switch (Q2) in a first half-bridge (6);
- a supply voltage connection and a reference ground connection for supplying a DC voltage signal (U₀) to the half-bridge arrangement;
- a load circuit (9), which has a lamp inductor (L₁) and a block capacitance (7) and is coupled on one side to the half-bridge centre point and on the other side to at least one connection for connecting the high-pressure discharge lamp (5);
- an actuation circuit (8) for providing at least a first actuation signal (G1) and a second actuation signal (G2) for the first electronic switch (Q1) and the second electronic switch (Q2),
- wherein the first and second actuation signals (G1, G2) are pulse-width-modulated signals of the same frequency, and the two actuation signals are each invertible with a low-frequency clock,
**characterized in that** the duty factor of the two actuation signals and the phase angles of the two actuation signals with respect to one another are each adjustable independently of one another.

2. Circuit arrangement according to Claim 1, **characterized in that** the load circuit has a block capacitance comprising a block capacitor (C_{B}), which is connected in series with the at least one connection of the high-pressure discharge lamp.

3. Circuit arrangement according to Claim 1, **characterized in that** the load circuit has a block capacitance comprising two block capacitors (C_{B1}, C_{B2}), which are connected symmetrically by at least one connection of the high-pressure discharge lamp in each case to the supply voltage connection and the reference ground connection.

4. Circuit arrangement according to one of the preceding claims, **characterized in that** the circuit arrangement has a second half-bridge (66) comprising a third electronic switch (Q3) and a fourth electronic switch (Q4) for exciting a resonant circuit (67) for starting the gas discharge lamp (5), which is arranged between the centre point of the first half-bridge (6) and a circuit ground.

5. Circuit arrangement according to Claim 4, **characterized in that** the third electronic switch (Q3) and the fourth electronic switch (Q4) in the second half-bridge (66) are likewise actuable by the actuation circuit (8).

6. Method for operating and implementing arc leveling for a high-pressure discharge lamp (5) comprising a circuit arrangement according to one of Claims 1-5, **characterized by** the following steps implemented during operation of the gas discharge lamp (5):
- actuating the first and second electronic switches (Q1, Q2) with a first and second actuation signal (G1, G2), wherein the actuation signals are pulse-width-modulated signals of the same frequency,
- varying or adjusting the duty factors of the actuation signals (G1, G2) in each case for the first electronic switch (Q1) and the second electronic switch (Q2) separately and independently of one another,
- adjusting and varying the phase angle of the two actuation signals during operation with respect to one another,
- inverting the two actuation signals with a low-frequency clock.

7. Method according to Claim 6 for operating a circuit arrangement according to Claim 4, **characterized by** the following steps implemented for starting the high-pressure discharge lamp (5):
- closing the first electronic switch (Q1) and opening the second electronic switch (Q2),
- actuating the second half-bridge (66) in such a way that the resonant circuit (67) is excited and a voltage is generated which is passed to the connections of the high-pressure discharge lamp (5) for starting the high-pressure discharge lamp (5),
- switching on the third electronic switch (Q3) and switching off the fourth electronic switch (Q4).

8. Method according to Claim 6, **characterized by** the following steps implemented for starting the high-pressure discharge lamp (5):
- closing the first electronic switch (Q1) and opening the second electronic switch (Q2),
- actuating the second half-bridge (66) in such a way that the resonant circuit (67) is excited and a voltage is generated which is passed to the connections of the high-pressure discharge lamp (5) for starting the high-pressure discharge lamp (5),
- actuating the second half-bridge (66) at a predetermined frequency such that a predetermined power flows into the gas discharge lamp,
- switching on the third electronic switch (Q3) and switching off the fourth electronic switch (Q4).

## Revendications

1. Circuiterie pour le fonctionnement et le redressement de l'arc d'une lampe à décharge à haute pression (5), avec
- au moins un premier (Q1) et un deuxième (Q2) interrupteurs électroniques dans un premier demi-pont (6);
- une borne de tension d'alimentation et une borne de masse de référence pour l'alimentation de l'agencement de demi-pont avec un signal de tension continue (U₀);
- un circuit de charge (9), qui présente une bobine de self de lampe (L₁) et une capacité bloc (7) et est couplé d'une part au noeud de demi-pont et d'autre part à au moins une borne pour le raccordement de la lampe à décharge à haute pression (5) ;
- un circuit de commande (8) pour la fourniture d'au moins un premier (G1) et un deuxième (G2) signaux de commande pour le premier (Q1) et le deuxième (Q2) interrupteurs électroniques,
- dans laquelle le premier et le deuxième signaux de commande (G1, G2) sont des signaux de même fréquence modulé en largeur d'impulsion, et les deux signaux de commande peuvent être inversés respectivement en une cadence à basse fréquence,
**caractérisée en ce que** le rapport de balayage des deux signaux de commande et les positions de phase des deux signaux de commande l'un par rapport à l'autre sont réglables indépendamment l'un de l'autre.

2. Circuiterie selon la revendication 1, **caractérisée en ce que** le circuit de charge présente une capacité bloc composée d'un condensateur bloc (C_{B}), qui est monté en série avec ladite au moins une borne de la lampe à décharge à haute pression.

3. Circuiterie selon la revendication 1, **caractérisée en ce que** le circuit de charge présente une capacité bloc composée de deux condensateurs blocs (C_{B1}, C_{B2}) , qui sont raccordés symétriquement par rapport à au moins une borne de la lampe à décharge à haute pression respectivement à la borne de tension d'alimentation et à la borne de masse de référence.

4. Circuiterie selon l'une quelconque des revendications précédentes, **caractérisée en ce que** la circuiterie présente un deuxième demi-pont (66) avec un troisième (Q3) et un quatrième (Q4) interrupteurs électroniques pour l'excitation d'un circuit résonnant (67) en vue de l'allumage de la lampe à décharge (5), qui est disposé entre le noeud du premier demi-pont (6) et une masse du circuit.

5. Circuiterie selon la revendication 4, **caractérisée en ce que** le troisième (Q3) et le quatrième (Q4) interrupteurs électroniques du deuxième demi-pont (66) peuvent également être commandés par le circuit de commande (8).

6. Procédé pour le fonctionnement et le redressement de l'arc d'une lampe à décharge à haute pression (5) avec une circuiterie selon l'une quelconque des revendications 1 à 5, **caractérisé par** les étapes suivantes exécutées pendant le fonctionnement de la lampe à décharge (5):
- commande du premier et du deuxième interrupteurs électroniques (Q1, Q2) avec un premier et un deuxième signal de commande (G1, G2), dans lequel les signaux de commande sont des signaux de même fréquence modulés en largeur d'impulsion,
- variation, respectivement réglage des rapports de balayage des signaux de commande (G1, G2) respectivement pour le premier interrupteur électronique (Q1) et le deuxième interrupteur électronique (Q2) séparément et indépendamment l'un de l'autre,
- réglage et variation de la position de phase des deux signaux de commande l'un par rapport à l'autre pendant le fonctionnement,
- inversion des deux signaux de commande en une cadence à basse fréquence.

7. Procédé selon la revendication 6 pour le fonctionnement d'une circuiterie selon la revendication 4, **caractérisé par** les étapes suivantes exécutées pour l'allumage de la lampe à décharge à haute pression (5):
- fermeture du premier interrupteur électronique (Q1) et ouverture du deuxième interrupteur électronique (Q2),
- commande du deuxième demi-pont (66) de telle manière que le circuit résonnant (67) soit excité et produise une tension, qui conduit aux bornes de la lampe à décharge à haute pression (5) pour l'allumage de la lampe à décharge à haute pression (5),
- enclenchement du troisième interrupteur électronique (Q3) et désenclenchement du quatrième interrupteur électronique (Q4).

8. Procédé selon la revendication 6, **caractérisé par** les étapes suivantes exécutées pour l'allumage de la lampe à décharge à haute pression (5):
- fermeture du premier interrupteur électronique (Q1) et ouverture du deuxième interrupteur électronique (Q2),
- commande du deuxième demi-pont (66) de telle manière que le circuit résonnant (67) soit excité et produise une tension, qui conduit aux bornes de la lampe à décharge à haute pression (5) pour l'allumage de la lampe à décharge à haute pression (5),
- commande du deuxième demi-pont (66) avec une fréquence prédéterminée, de telle manière qu'une puissance prédéterminée circule dans la lampe à décharge,
- enclenchement du troisième interrupteur électronique (Q3) et désenclenchement du quatrième interrupteur électronique (Q4).
